# FASCICULE DE BREVET EUROPEEN

(11) **EP 2 062 804 B1**
(45) Date de publication et mention de la délivrance du brevet: **16.05.2012**
(21) Numéro de dépôt: 08168421.9
(22) Date de dépôt: 05.11.2008
(51) Int. Cl.: B62D 25/16, B62D 27/06, B62D 65/02

(54) **Dispositif et procédé de fixation d'un ensemble d'aile sur une paroi de caisse d'un véhicule automobile**
Vorrichtung und Verfahren zur Befestigung einer Kotflügeleinheit an der Wagenkastenwand eines Kraftfahrzeugs
Device and method for attaching a wing assembly to an automobile body shell wall

(30) Priorité: 23.11.2007 FR 0759262
(43) Date de publication de la demande: 27.05.2009
(73) Titulaire: PEUGEOT CITROËN AUTOMOBILES S.A., 78140 Vélizy Villacoublay (FR)
(72) Inventeur: Zola, Samba, 78000 Versailles (FR)
(74) Mandataire: Allain, Laurent

(56) Documents cités:
- US-A1- 2006 001 293
- US-B1- 6 382 675

## Description

La présente invention a trait à un dispositif de fixation d'un ensemble d'aile sur une paroi de caisse d'un véhicule automobile. L'invention a également trait à un véhicule automobile comportant un ensemble d'aile fixé sur une paroi de caisse du véhicule et à un procédé de fixation d'un ensemble d'aile sur une paroi de caisse d'un véhicule automobile.

Au sens de l'invention, un ensemble d'aile désigne un ensemble comprenant une aile de véhicule automobile et un élément de fermeture d'un espace délimité entre l'aile et une paroi de caisse du véhicule en configuration fixée de l'aile sur cette paroi de caisse.

Dans le domaine automobile, le montage d'une aile sur une paroi de caisse d'un véhicule est réalisé en maintenant un jeu, qui est imposé structurellement, entre la paroi d'habillage de l'aile et la paroi de caisse, de sorte qu'il existe un espace vide délimité entre ces deux parois. Cet espace est classiquement comblé au moyen d'une tôle, dite « de fermeture », qui est soudée sur l'aile de manière à s'étendre en direction de la paroi de caisse en configuration fixée de l'aile sur la paroi de caisse. L'étanchéité de l'assemblage est alors obtenue, de manière connue, par l'insertion de mastic entre la tôle de fermeture et la paroi de caisse. Or, cette insertion de mastic nuit à l'esthétique de l'assemblage obtenu, qui ne présente pas un aspect de finition optimal. De plus, la tôle de fermeture soudée sur l'aile est susceptible d'empêcher un positionnement géométrique précis de l'aile par rapport à la paroi de caisse.

C'est à ces inconvénients qu'entend plus particulièrement remédier l'invention en proposant un dispositif de fixation d'un ensemble d'aile sur une paroi de caisse d'un véhicule automobile permettant de garantir un positionnement relatif précis de l'aile par rapport à la paroi de caisse et d'améliorer l'esthétique de l'assemblage obtenu. Un dispositif de fixation tel que décrit dans le préambule de la revendication 1 est aussi connu du document US 2006/0001293A1.

A cet effet, l'invention a pour objet un dispositif de fixation, sur une paroi de caisse d'un véhicule automobile, d'un ensemble d'aile comprenant une aile de véhicule et un élément de fermeture d'un espace délimité entre l'aile et la paroi de caisse en configuration fixée de l'aile sur la paroi de caisse, caractérisé en ce qu'il comprend un support de fixation à la fois de l'aile et de l'élément de fermeture sur la paroi de caisse, le support étant destiné à être solidarisé avec la paroi de caisse et comportant une première patte de fixation de l'aile et une deuxième patte de fixation de l'élément de fermeture, les première et deuxième pattes s'étendant perpendiculairement l'une par rapport à l'autre.

Selon d'autres caractéristiques avantageuses d'un dispositif de fixation selon l'invention, prises isolément ou selon toutes les combinaisons techniquement possibles :
- le support comporte une partie destinée à être solidarisée avec la paroi de caisse, les première et deuxième pattes s'étendant en saillie par rapport à cette partie ;
- le dispositif comprend des moyens de fixation de l'aile sur la première patte, ces moyens comportant au moins une encoche, ménagée dans un premier élément parmi la première patte et un rebord de l'aile qui s'étend en saillie par rapport à une paroi d'habillage de l'aile, l'encoche étant propre à recevoir en coulissement la tige d'une vis qui est pré-montée sur le deuxième élément parmi la première patte et le rebord de l'aile et dont la tête de vis est propre à venir en appui contre deux bords opposés de l'encoche ;
- le dispositif comprend des moyens de fixation de l'élément de fermeture sur la deuxième patte par encliquetage, ces moyens comportant un organe déformable élastiquement, solidaire d'un premier élément parmi l'élément de fermeture et la deuxième patte et propre à être encliqueté dans un orifice du deuxième élément parmi l'élément de fermeture et la deuxième patte.

L'invention a également pour objet un véhicule automobile comportant un ensemble d'aile fixé sur une paroi de caisse du véhicule, l'ensemble d'aile comprenant une aile de véhicule et un élément de fermeture d'un espace délimité entre l'aile et la paroi de caisse en configuration fixée de l'aile sur la paroi de caisse, l'ensemble d'aile étant fixé sur la paroi de caisse au moyen d'un dispositif de fixation tel que décrit ci-dessus.

Selon d'autres caractéristiques avantageuses d'un véhicule automobile selon l'invention :
- la première patte du support s'étend dans un plan transversal par rapport à une direction verticale du véhicule, alors que la deuxième patte du support s'étend dans un plan transversal par rapport à une direction longitudinale du véhicule ;
- un premier élément parmi la première patte du support et un rebord de l'aile qui s'étend en saillie par rapport à une paroi d'habillage de l'aile comporte au moins une encoche qui reçoit la tige d'une vis montée sur le deuxième élément parmi la première patte et le rebord de l'aile, la position de la tige de la vis dans l'encoche étant réglable selon une direction transversale du véhicule.

Enfin, l'invention a pour objet un procédé de fixation, sur une paroi de caisse d'un véhicule automobile, d'un ensemble d'aile comprenant une aile de véhicule et un élément de fermeture d'un espace délimité entre l'aile et la paroi de caisse en configuration fixée de l'aile sur la paroi de caisse, au moyen d'un dispositif de fixation tel que décrit ci-dessus, ce procédé comprenant des étapes dans lesquelles :
- on solidarise le support avec la paroi de caisse, de telle sorte que les première et deuxième pattes du support sont en saillie par rapport à la paroi de caisse ;
- on fixe l'aile sur la première patte du support ;
- on fixe l'élément de fermeture sur la deuxième patte du support.

De manière avantageuse, on fixe l'aile sur la première patte du support en faisant coulisser, dans une encoche ménagée dans un premier élément parmi la première patte et un rebord de l'aile qui s'étend en saillie par rapport à une paroi d'habillage de l'aile, la tige d'une vis pré-montée sur le deuxième élément parmi la première patte et le rebord de l'aile, puis en vissant la vis de manière à immobiliser le premier élément en appui entre la tête de la vis et le deuxième élément.

De manière avantageuse également, on fixe l'élément de fermeture sur la deuxième patte par encliquetage d'un organe déformable élastiquement, solidaire d'un premier élément parmi l'élément de fermeture et la deuxième patte, dans un orifice du deuxième élément parmi l'élément de fermeture et la deuxième patte.

Les caractéristiques et avantages de l'invention apparaîtront dans la description qui va suivre d'un mode de réalisation d'un dispositif et d'un procédé de fixation conformes à l'invention, donnée uniquement à titre d'exemple et faite en se référant aux dessins annexés dans lesquels :
- la figure 1 est une vue en perspective partielle d'un dispositif conforme à l'invention de fixation d'un ensemble d'aile sur une paroi de caisse d'un véhicule automobile, lors d'une première étape de fixation de l'ensemble d'aile sur la paroi de caisse ;
- la figure 2 est une vue à plus grande échelle du détail II de la figure 1, lors d'une deuxième étape de fixation de l'ensemble d'aile sur la paroi de caisse ;
- la figure 3 est une coupe selon le plan III de la figure 2, en configuration fixée de l'ensemble d'aile sur la paroi de caisse ; et
- la figure 4 est une coupe selon le plan IV de la figure 2, en configuration fixée de l'ensemble d'aile sur la paroi de caisse.

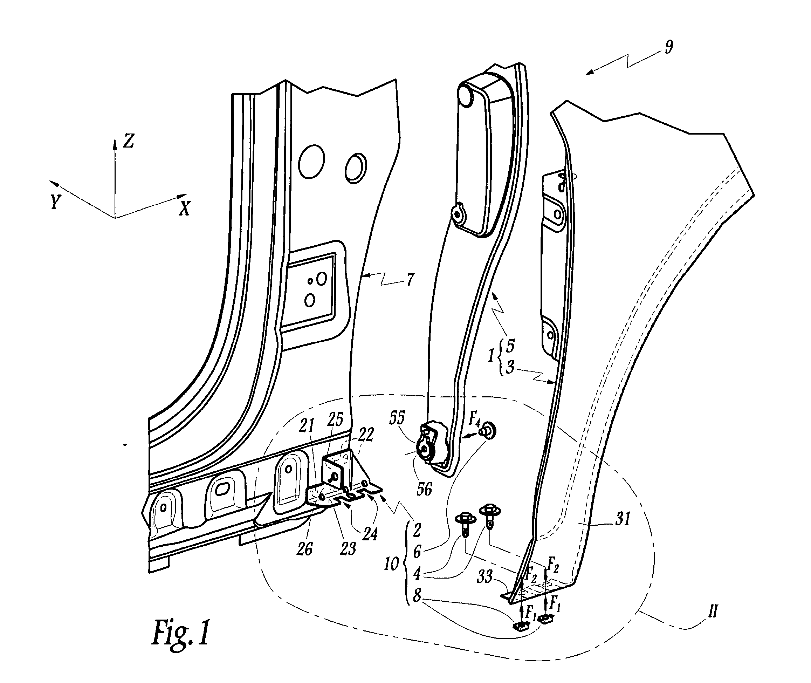

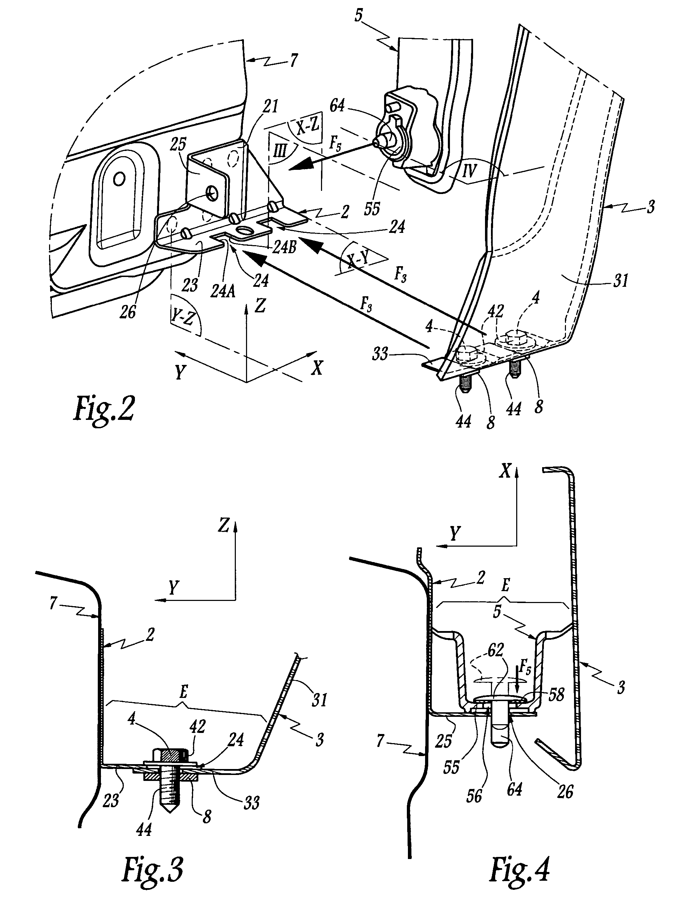

Sur la figure 1 sont représentés, partiellement et en éclaté, une paroi de caisse 7 et un ensemble d'aile 1 d'un véhicule automobile 9. L'ensemble d'aile 1 est prévu pour être fixé sur la paroi 7 qui, dans l'exemple représenté, est une paroi latérale droite de l'habitacle du véhicule 9. L'ensemble d'aile 1 comprend une aile 3 avant droite du véhicule et un élément de fermeture 5 qui est destiné à obturer un espace E délimité entre une paroi d'habillage 31 de l'aile 3 et la paroi de caisse 7 en configuration fixée de l'aile 3 sur la paroi 7, comme montré sur la figure 4.

L'aile 3 et l'élément de fermeture 5 sont deux pièces indépendantes l'une de l'autre. En particulier, l'élément de fermeture 5 est avantageusement constitué en un matériau synthétique et rapporté sur la caisse du véhicule 9 uniquement après le passage en cataphorèse et la peinture de la caisse. En variante, l'élément de fermeture 5 peut être constitué en tôle ou en tout autre matériau présentant des propriétés adaptées à sa fonction.

On note X une direction longitudinale arrière-avant du véhicule 9, Y une direction transversale droite-gauche du véhicule 9 et Z une direction verticale bas-haut du véhicule 9. L'ensemble d'aile 1 est fixé sur la paroi de caisse 7 en partie inférieure de la caisse du véhicule 9, au moyen d'un dispositif de fixation 10 conforme à l'invention, comprenant un support 2 qui permet la fixation à la fois de l'aile 3 et de l'élément de fermeture 5 sur la paroi de caisse 7.

Comme visible sur les figures 1 et 2, le support 2 comporte une partie dorsale 21, prévue pour être solidarisée avec la paroi de caisse 7, et deux pattes 23 et 25 de fixation, respectivement, de l'aile 3 et de l'élément de fermeture 5. La partie dorsale 21 est sensiblement plane et propre à venir en appui surfacique contre la paroi de caisse 7. Lorsqu'elle est solidarisée avec la paroi de caisse 7, la partie 21 s'étend dans un plan X-Z perpendiculaire à la direction transversale Y du véhicule 9. Les pattes de fixation 23 et 25 s'étendent en saillie par rapport à la partie 21 et perpendiculairement l'une par rapport à l'autre. Plus précisément, en configuration fixée du support 2 sur la paroi de caisse 7, la patte 23 de fixation de l'aile 3 s'étend dans un plan X-Y perpendiculaire à la direction verticale Z du véhicule 9, alors que la patte 25 de fixation de l'élément de fermeture 5 s'étend dans un plan Y-Z perpendiculaire à la direction longitudinale X du véhicule 9.

Pour la fixation de l'aile 3 sur la patte 23, le dispositif 10 comprend deux vis 4 destinées à immobiliser un rebord interne 33 de l'aile 3 par rapport à la patte de fixation 23. Comme montré sur la figure 3, le rebord 33 s'étend en saillie par rapport à la paroi d'habillage 31 de l'aile 3 et est en recouvrement au moins partiel avec la patte 23 en configuration fixée de l'aile 3 sur la patte 23. Le rebord 33 est muni de deux écrous cages 8, qui permettent le pré-montage et le vissage des vis 4 sur le rebord 33. La patte de fixation 23 comporte quant à elle deux encoches 24 dirigées selon la direction transversale Y du véhicule 9.

Chaque encoche 24 est propre à recevoir en coulissement la tige 44 de l'une des deux vis 4, pré-montées mais non vissées sur le rebord 33, de telle sorte que la patte 23 est intercalée, selon la direction verticale Z, entre le rebord 33 et la tête 42 de chaque vis 4, au voisinage de chaque encoche 24. Lorsque les deux vis 4 sont vissées dans leur écrou cage 8 respectif, les deux têtes de vis 42 coopèrent avec la patte 23 au voisinage des encoches 24 et la patte 23 est bloquée en appui entre le rebord 33 et les deux têtes de vis 42. L'aile 3 est alors fixée rigidement sur le support 2.

Pour la fixation de l'élément de fermeture 5 sur la patte 25, le dispositif 10 comprend des moyens d'encliquetage, qui comportent un rivet plastique 6 propre à être pré-monté sur l'élément de fermeture 5. Le rivet 6 est pourvu d'une tige 64 déformable élastiquement, destinée à être encliquetée dans un orifice 26 prévu dans la deuxième patte 25. Le pré-montage du rivet 6 sur l'élément de fermeture 5 est réalisé en introduisant la tige 64 dans un orifice 56 de l'élément 5, percé dans une paroi 55 de l'élément 5 et destiné à venir en regard avec l'orifice 26. Le rivet 6 est immobilisé dans l'orifice 56 au moyen d'une rondelle 58, qui est prévue pour recevoir en appui une tête 62 du rivet 6 en configuration fixée de l'élément de fermeture 5 sur la patte 25.

Un procédé de fixation de l'ensemble d'aile 1 sur la paroi de caisse 7 au moyen du dispositif 10 comprend des étapes dans lesquelles :
Tout d'abord, on solidarise la partie dorsale 21 du support 2 avec la paroi de caisse 7, de telle sorte que les pattes de fixation 23 et 25 font saillie vers l'extérieur par rapport à la paroi de caisse 7, dans leurs plans X-Y et Y-Z respectifs. Dans l'exemple représenté, la partie dorsale 21 du support 2 est solidarisée avec la paroi de caisse 7 par soudage, au niveau de points de soudure 22.

On fixe ensuite l'aile 3 sur la patte 23 du support 2. A cet effet, on rapporte les deux écrous cages 8 sur le rebord 33 de l'aile 3, puis on pré-monte chaque vis 4 dans un écrou cage 8, comme montré par les flèches F₁ et F₂ de la figure 1. On fait alors coulisser la tige 44 de chaque vis 4, pré-montée mais non vissée sur le rebord 33, dans l'encoche 24 correspondante de la patte 23, dans le sens des flèches F₃ de la figure 2, de sorte que le rebord 33 est amené en recouvrement au moins partiel avec la patte 23, en étant positionné au-dessous de celle-ci. Dans cette configuration, la patte 23 est intercalée selon la direction verticale Z entre le rebord 33 et la tête 42 de chaque vis 4. On procède alors à l'immobilisation de la patte 23 en appui entre la tête 42 de chaque vis 4 et le rebord 33, par vissage de chaque vis 4 dans l'écrou cage 8 correspondant, jusqu'à ce que la tête 42 de la vis 4 coopère avec les bords 24A et 24B de l'encoche 24 associée.

Cette fixation de l'aile 3 sur le support 2, au moyen des vis 4 pré-montées sur le rebord 33 et passant dans les encoches 24 de la patte 23, a l'avantage d'être réalisable de manière aisée par un opérateur. En particulier, le pré-montage des vis 4 sur le rebord 33 évite une mise en place des vis postérieurement au positionnement de l'aile 3 par rapport à la paroi de caisse 7, qui serait une opération délicate du fait de l'étroitesse de la zone de fixation de l'aile 3 sur la paroi 7 et de l'encombrement dans la partie inférieure de la caisse du véhicule 9. En outre, préalablement au vissage des deux vis 4, la position de la tige 44 de chaque vis 4 dans l'encoche 24 correspondante est ajustable selon la direction transversale Y du véhicule 9. Il est ainsi possible de régler précisément l'écartement relatif entre la paroi d'habillage 31 de l'aile 3 et la paroi de caisse 7, c'est-à-dire l'épaisseur, selon la direction transversale Y du véhicule 9, de l'espace E délimité entre ces parois, de sorte que l'élément de fermeture vient combler l'espace E de manière étanche.

Enfin, on fixe l'élément de fermeture 5 sur la patte 25 du support 2. On monte tout d'abord le rivet 6 sur l'élément 5, comme représenté par la flèche F₄ de la figure 1, en introduisant la tige 64 dans l'orifice 56, à travers la rondelle 58. On procède ensuite à l'encliquetage de la tige 64 du rivet 6 dans l'orifice 26 de la patte 25, en faisant coïncider les orifices 26 et 56 et en plaquant la tête 62 du rivet 6 en appui contre la rondelle 58, dans le sens de la flèche F₅ des figure 2 et 4. L'élément de fermeture 5 est alors fixé rigidement sur le support 2 et obture de manière étanche l'espace E délimité entre la paroi d'habillage 31 de l'aile 3 et la paroi de caisse 7.

Comme il ressort de l'exemple décrit précédemment, un dispositif de fixation conforme à l'invention permet un montage aisé d'un ensemble d'aile, comprenant une aile et un élément de fermeture indépendants, sur une paroi de caisse d'un véhicule automobile. En particulier, l'aile 3 et l'élément de fermeture 5 sont fixés sur la paroi de caisse 7 au moyen d'un unique support 2. L'utilisation d'un support unique, au lieu de deux supports dédiés respectivement à la fixation de l'aile et à la fixation de l'élément de fermeture, est avantageuse pour la fixation de l'ensemble d'aile en partie inférieure de la caisse du véhicule car cette zone de fixation est particulièrement étroite et encombrée.

De plus, la fourniture d'un support unique de fixation à la fois de l'aile 3 et de l'élément de fermeture 5, au lieu de deux supports indépendants, réduit le coût de fabrication du dispositif de fixation 10 selon l'invention. Le temps de montage de l'ensemble d'aile sur la paroi de caisse est également sensiblement réduit, puisqu'il n'y a qu'un seul support à solidariser avec la paroi de caisse. En outre, le support 2 unique permet de limiter les dispersions géométriques entre l'aile 3, l'élément de fermeture 5 et la paroi de caisse 7 et garantit ainsi un positionnement géométrique précis de l'aile par rapport à la paroi de caisse.

Par ailleurs, grâce à l'optimisation du profil de l'élément de fermeture 5 et à la possibilité d'ajuster la position de l'aile 3 par rapport à la paroi de caisse 7 selon la direction transversale Y du véhicule, l'étanchéité de l'assemblage de l'ensemble d'aile avec la paroi 7 est garantie. Dès lors, il n'est pas nécessaire d'ajouter du mastic à l'interface entre l'élément de fermeture et la paroi de caisse. L'esthétique de l'assemblage obtenu avec le dispositif de fixation 10 selon l'invention est ainsi améliorée par rapport aux assemblages de l'état de la technique.

L'invention n'est pas limitée à l'exemple décrit et représenté. En particulier, dans le mode de réalisation décrit précédemment, les pattes de fixation 23 et 25 sont strictement perpendiculaires l'une par rapport à l'autre. En variante, chaque patte 23 ou 25 peut s'étendre dans un plan transversal, voisin d'un plan strictement perpendiculaire, par rapport au plan de l'autre patte.

Par ailleurs, les vis de fixation 4 pré-montées sur le rebord 33 de l'aile 3 et propres à coopérer avec des encoches 24 de la patte 23 peuvent être remplacées par des vis de fixation pré-montées sur la patte 23 et propres à coopérer avec des encoches 24 du rebord 33. De même, le rivet 6 peut être pré-monté sur la patte 25, au lieu de l'élément de fermeture 5, et destiné à coopérer avec un orifice ménagé dans une paroi de l'élément 5.

## Revendications

1. Dispositif (10) de fixation, sur une paroi de caisse (7) d'un véhicule automobile (9), d'un ensemble d'aile (1) comprenant une aile (3) de véhicule, un élément (5) de fermeture d'un espace (E) délimité entre l'aile (3) et la paroi de caisse (7) en configuration fixée de l'aile sur la paroi de caisse, et un support (2) de fixation à la fois de l'aile (3) et de l'élément de fermeture (5) sur la paroi de caisse (7), le support (2) étant propre à être solidarisé avec la paroi de caisse (7) et comportant une première patte (23) de fixation de l'aile (3) et une deuxième patte (25) de fixation de l'élément de fermeture (5), les première (23) et deuxième (25) pattes s'étendant perpendiculairement l'une par rapport à l'autre, **caractérisé en ce que** le support (2) comporte une partie (21) destinée à être solidarisée avec la paroi de caisse (7), les première (23) et deuxième (25) pattes s'étendant en saillie par rapport à ladite partie (21).

2. Dispositif de fixation selon la revendication 1, **caractérisé en ce qu'**il comprend des moyens de fixation de l'aile (3) sur la première patte (23), ces moyens comportant au moins une encoche (24), ménagée dans un premier élément parmi la première patte (23) et un rebord (33) de l'aile qui s'étend en saillie par rapport à une paroi d'habillage (31) de l'aile, l'encoche (24) étant propre à recevoir en coulissement la tige (44) d'une vis (4) qui est pré-montée sur le deuxième élément parmi la première patte (23) et le rebord (33) de l'aile et dont la tête de vis (42) est propre à venir en appui contre deux bords (24A, 24B) opposés de l'encoche.

3. Dispositif de fixation selon l'une quelconque des revendications 1 ou 2, **caractérisé en ce qu'**il comprend des moyens de fixation de l'élément de fermeture (5) sur la deuxième patte (25) par encliquetage, ces moyens comportant un organe (6) déformable élastiquement, solidaire d'un premier élément parmi l'élément de fermeture (5) et la deuxième patte (25) et propre à être encliqueté dans un orifice (26) du deuxième élément parmi l'élément de fermeture (5) et la deuxième patte (25).

4. Véhicule automobile (9) comportant un ensemble d'aile (1) fixé sur une paroi de caisse (7) du véhicule, l'ensemble d'aile (1) comprenant une aile (3) de véhicule et un élément (5) de fermeture d'un espace (E) délimité entre l'aile (3) et la paroi de caisse (7) en configuration fixée de l'aile sur la paroi de caisse, **caractérisé en ce que** l'ensemble d'aile (1) est fixé sur la paroi de caisse (7) au moyen d'un dispositif de fixation (10) selon l'une quelconque des revendications précédentes.

5. Véhicule automobile selon la revendication 4, **caractérisé en ce que** la première patte (23) du support (2) s'étend dans un plan (X-Y) transversal par rapport à une direction verticale (Z) du véhicule (9), alors que la deuxième patte (25) du support (2) s'étend dans un plan (Y-Z) transversal par rapport à une direction longitudinale (X) du véhicule (9).

6. Véhicule automobile selon l'une quelconque des revendications 4 ou 5, **caractérisé en ce qu'**un premier élément parmi la première patte (23) du support (2) et un rebord (33) de l'aile (3) qui s'étend en saillie par rapport à une paroi d'habillage (31) de l'aile comporte au moins une encoche (24) qui reçoit la tige (44) d'une vis (4) montée sur le deuxième élément parmi la première patte (23) et le rebord (33) de l'aile, la position de la tige (44) de la vis dans l'encoche (24) étant réglable selon une direction transversale (Y) du véhicule (9).

7. Procédé de fixation, sur une paroi de caisse (7) d'un véhicule automobile (9), d'un ensemble d'aile (1) comprenant une aile (3) de véhicule et un élément (5) de fermeture d'un espace (E) délimité entre l'aile (3) et la paroi de caisse (7) en configuration fixée de l'aile sur la paroi de caisse, au moyen d'un dispositif de fixation (10) selon l'une quelconque des revendications 1 à 3, **caractérisé en ce qu'**il comprend des étapes dans lesquelles :
- on solidarise le support (2) avec la paroi de caisse (7), de telle sorte que les première (23) et deuxième (25) pattes du support sont en saillie par rapport à la paroi de caisse (7) ;
- on fixe l'aile (3) sur la première patte (23) du support (2) ;
- on fixe l'élément de fermeture (5) sur la deuxième patte (25) du support (2).

8. Procédé de fixation selon la revendication 7, **caractérisé en ce qu'**on fixe l'aile (3) sur la première patte (23) du support (2) en faisant coulisser, dans une encoche (24) ménagée dans un premier élément parmi la première patte (23) et un rebord (33) de l'aile (3) qui s'étend en saillie par rapport à une paroi d'habillage (31) de l'aile, la tige (44) d'une vis (4) pré-montée sur le deuxième élément parmi la première patte (23) et le rebord (33) de l'aile, puis en vissant la vis (4) de manière à immobiliser le premier élément (23) en appui entre la tête (42) de la vis (4) et le deuxième élément (33).

9. Procédé de fixation selon l'une quelconque des revendications 7 ou 8, **caractérisé en ce qu'**on fixe l'élément de fermeture (5) sur la deuxième patte (25) par encliquetage d'un organe (6) déformable élastiquement, solidaire d'un premier élément parmi l'élément de fermeture (5) et la deuxième patte (25), dans un orifice (26) du deuxième élément parmi l'élément de fermeture (5) et la deuxième patte (25).

## Claims

1. A device (10) for attaching, on a body wall (7) of a motor vehicle (9), a wing assembly (1) including a vehicle wing (3), a closing element (5) of a space (E) delimited between the wing (3) and the body wall (7) in fixed configuration of the wing on the body wall, and an attachment support (2) both of the wing (3) and of the closing element (5) on the body wall (7), the support (2) being suited to be integrated with the body wall (7) and comprising a first attachment lug (23) of the wing (3) and a second attachment lug (25) of the closing element (5), the first (23) and second (25) lugs extending perpendicularly with respect to each other, **characterized in that** the support (2) comprises a part (21) intended to be integrated with the body wall (7), the first (23) and second (25) lugs extending in a projecting manner with respect to the said part (21).

2. The attachment device according to Claim 1, **characterized in that** it includes means for attaching the wing (3) on the first lug (23), these means comprising at least one notch (24), arranged in a first element amid the first lug (23) and a rim (33) of the wing which extends in a projecting manner with respect to a trim wall (31) of the wing, the notch (24) being suited to receive in a sliding manner the stem (44) of a screw (4) which is pre-mounted on the second element amid the first lug (23) and the rim (33) of the wing, and the screw head (42) of which is suited to come to rest against two opposite edges (24A, 24B) of the notch.

3. The attachment device according to any one of Claims 1 or 2, **characterized in that** it includes means for attachment of the closing element (5) on the second lug (25) by snapping in, these means comprising an elastically deformable member (6), integral with a first element amid the closing element (5) and the second lug (25) and suited to be snapped in an orifice (26) of the second element amid the closing element (5) and the second lug (25).

4. A motor vehicle (9) comprising a wing assembly (1) attached to a body wall (7) of the vehicle, the wing assembly (1) including a vehicle wing (3) and a closing element (5) of a space (E) delimited between the wing (3) and the body wall (7) in fixed configuration of the wing on the body wall, **characterized in that** the wing assembly (1) is attached to the body wall (7) by means of an attachment device (10) according to any one of the preceding claims.

5. The motor vehicle according to Claim 4, **characterized in that** the first lug (23) of the support (2) extends in a transverse plane (X-Y) with respect to a vertical direction (Z) of the vehicle (9), whereas the second lug (25) of the support (2) extends in a transverse plane (Y-Z) with respect to a longitudinal direction (X) of the vehicle (9).

6. The motor vehicle according to any one of Claims 4 or 5, **characterized in that** a first element amid the first lug (23) of the support (2) and a rim (33) of the wing (3) which extends in a projecting manner with respect to a trim wall (31) of the wing comprises at least one notch (24) which receives the stem (44) of a screw (4) mounted on the second element amid the first lug (23) and the rim (33) of the wing, the position of the stem (44) of the screw in the notch (24) being adjustable along a transverse direction (Y) of the vehicle (9).

7. An attachment method, on a body wall (7) of a motor vehicle (9), of a wing assembly (1) including a vehicle wing (3) and a closing element (5) of a space (E) delimited between the wing (3) and the body wall (7) in attached configuration of the wing on the body wall, by means of an attachment device (10) according to any one of Claims 1 to 3, **characterized in that** it includes steps in which:
- the support (2) is integrated with the body wall (7), such that the first (23) and second (25) lugs of the support are projecting with respect to the body wall (7);
- the wing (3) is attached to the first lug (23) of the support (2);
- the closing element (5) is attached to the second lug (25) of the support (2).

8. The attachment method according to Claim 7, **characterized in that** the wing (3) is attached to the first lug (23) of the support (2) by sliding, in a notch (24) arranged in a first element amid the first lug (23) and a rim (33) of the wing (3) which extends in a projecting manner with respect to a trim wall (31) of the wing, the stem (44) of a screw (4) pre-mounted on the second element amid the first lug (23) and the rim (33) of the wing, then by tightening the screw (4) so as to immobilise the first element (23) resting between the head (42) of the screw (4) and the second element (33).

9. The attachment method according to any one of Claims 7 or 8, **characterized in that** the closing element (5) is attached to the second lug (25) by snapping in of an elastically deformable member (6), integral with a first element amid the closing element (5) and the second lug (25), in an orifice (26) of the second element amid the closing element (5) and the second lug (25).

## Patentansprüche

1. Befestigungsvorrichtung (10) einer Kotflügeleinheit (1) auf einer Karosseriewand (7) eines Kraftfahrzeugs (9), die einen Fahrzeugkotflügel (3), ein Verschlusselement (5) eines Raums (E), der von dem Kotflügel (3) und der Karosseriewand (7) in der Konfiguration, in der der Kotflügel auf der Karosseriewand befestigt ist, abgegrenzt wird, und einen Befestigungsträger (2) sowohl des Kotflügels (3) als auch des Verschlusselements (5) auf der Karosseriewand (7) aufweist, wobei der Träger (2) fest mit der Karosseriewand (7) verbunden werden kann und eine erste Befestigungspratze (23) des Kotflügels (3) und eine zweite Befestigungspratze (25) des Verschlusselements (5) aufweist, wobei sich die erste (23) und die zweite (25) Pratze senkrecht zueinander erstrecken, **dadurch gekennzeichnet, dass** der Träger (2) einen Teil (21) aufweist, der dazu bestimmt ist, mit der Karosseriewand (7) fest verbunden zu werden, wobei sich die erste (23) und die zweite (25) Pratze in Bezug zu dem Teil (21) vorstehend erstrecken.

2. Befestigungsvorrichtung nach Anspruch 1, **dadurch gekennzeichnet, dass** sie Befestigungsmittel des Kotflügels (3) auf der ersten Pratze (23) aufweist, wobei diese Mittel mindestens eine Kerbe (24) aufweisen, die in einem ersten Element, entweder der ersten Pratze (23) oder einem Rand (33) des Kotflügels, der sich in Bezug zu einer Verkleidungswand (31) des Kotflügels vorstehend erstreckt, eingerichtet ist, wobei die Kerbe (24) unter Gleiten den Schaft (44) einer Schraube (4) aufnehmen kann, die auf das zweite Element, erste Pratze (23) oder Rand (33) des Kotflügels, vormontiert ist, und deren Schraubenkopf (42) gegen zwei Ränder (24A, 24B), die der Kerbe entgegengesetzt sind, zum Aufliegen kommen kann.

3. Befestigungsvorrichtung nach einem der Ansprüche 1 oder 2, **dadurch gekennzeichnet, dass** sie Mittel zum Befestigen des Verschlusselements (5) auf der zweiten Pratze (25) durch Einrasten aufweist, wobei diese Mittel ein elastisch verformbares Organ (6) aufweisen, das fest mit einem ersten der Elemente, Verschlusselement (5) oder zweite Pratze, (25) verbunden und geeignet ist, um in einer Öffnung (26) des zweiten Elements, Verschlusselement (5) oder zweite Pratze (25), eingerastet zu werden.

4. Kraftfahrzeug (9), das eine Kotflügelbaugruppe (1) aufweist, die auf einer Karosseriewand (7) des Fahrzeugs montiert ist, wobei die Kotflügelbaugruppe (1) einen Fahrzeugkotflügel (3) und ein Verschlusselement (5) eines Raums (E), der bei der Konfiguration, bei der der Kotflügel auf der Karosseriewand befestigt ist, zwischen dem Kotflügel (3) und der Karosseriewand (7) abgegrenzt ist, aufweist, **dadurch gekennzeichnet, dass** die Kotflügelbaugruppe (1) auf der Karosseriewand (7) mittels einer Befestigungsvorrichtung (10) nach einem der vorhergehenden Ansprüche befestigt ist.

5. Kraftfahrzeug nach Anspruch 4, **dadurch gekennzeichnet, dass** sich die erste Pratze (23) des Trägers (2) in einer Ebene (X-Y) quer in Bezug zu einer Längsrichtung (Z) des Fahrzeugs (9) erstreckt, während sich die zweite Pratze (25) des Trägers (2) in einer Ebene (Y-Z) quer in Bezug zu einer Längsrichtung (X) des Fahrzeugs (9) erstreckt.

6. Kraftfahrzeug nach einem der Ansprüche 4 oder 5, **dadurch gekennzeichnet, dass** sich das erste Element, entweder die Pratze (23) des Trägers (2) oder der Rand (33) des Kotflügels (3), das sich in Bezug zu einer Verkleidungswand (31) des Kotflügels vorstehend erstreckt, mindestens eine Kerbe (24) aufweist, die den Schaft (44) einer Schraube (4) aufnimmt, die auf das zweite Element, entweder die erste Pratze (23) oder der Rand (33), des Kotflügels montiert ist, wobei die Position des Schafts (44) der Schraube in der Kerbe (24) entlang einer Querrichtung (Y) des Fahrzeugs (9) einstellbar ist.

7. Verfahren zum Befestigen auf einer Karosseriewand (7) eines Kraftfahrzeugs (9) einer Kotflügelbaugruppe (1), die einen Fahrzeugkotflügel (3) und ein Verschlusselement (5) eines Raums (E), der bei der Konfiguration, in der der Kotflügel auf der Karosseriewand befestigt ist, zwischen dem Kotflügel (3) und der Karosseriewand (7) abgegrenzt ist, aufweist, mittels einer Befestigungsvorrichtung (10) nach einem der Ansprüche 1 bis 3, **dadurch gekennzeichnet, dass** es die folgenden Schritte aufweist:
- festes Befestigen des Trägers (2) mit der Karosseriewand (7) derart, dass die erste (23) und zweite (25) Pratze des Trägers in Bezug zu der Karosseriewand (7) vorstehen;
- Befestigen des Kotflügels (3) auf der ersten Pratze (23) des Trägers (2);
- Befestigen des Verschlusselements (5) auf der zweiten Pratze (25) des Trägers (2).

8. Verfahren zum Befestigen nach Anspruch 7, **dadurch gekennzeichnet, dass** man den Kotflügel (3) auf der ersten Pratze (23) des Trägers (2) befestigt, indem man in einer Kerbe (24), die in einem ersten der Elemente, erste Pratze (23) oder ein Rand (33) des Kotflügels (3), das sich in Bezug zu einer Verkleidungswand (31) des Kotflügels erstreckt, den Schaft (44) einer Schraube (4) gleiten lässt, die auf dem zweiten der Elemente, erste Pratze (23) oder Rand (33) des Kotflügels vormontiert ist, indem man dann die Schraube (4) derart schraubt, dass man das erste Element (23) in Auflage zwischen dem Kopf (42) der Schraube (4) und dem zweiten Element (33) stillstellt.

9. Befestigungsverfahren nach einem der Ansprüche 7 oder 8, **dadurch gekennzeichnet, dass** man das Verschlusselement (5) auf der zweiten Pratze (25) durch Einrasten eines elastisch verformbaren Organs (6), das fest mit einem ersten der Elemente, entweder Verschlusselement (5) oder zweite Pratze (25), verbunden ist, in einer Öffnung (26) des zweiten der Elemente, Verschlusselement (5) oder zweite Pratze (25), befestigt.
